# EUROPEAN PATENT APPLICATION

(11) **EP 4 607 956 A1**
(43) Date of publication of application: **27.08.2025**
(21) Application number: 23893573.8
(22) Date of filing: 31.10.2023
(51) Int. Cl.: H04R 3/00

(54) **WEARABLE AUDIO PICKUP DEVICE AND AUDIO PICKUP METHOD**

(30) Priority: 25.11.2022 CN 202211492934
(71) Applicant: Huawei Technologies Co., Ltd., Shenzhen, Guangdong 518129 (CN)
(72) Inventor: SHI, Chaoyu, Shenzhen, Guangdong 518129 (CN); LUO, You, Shenzhen, Guangdong 518129 (CN); ZHU, Mengyao, Shenzhen, Guangdong 518129 (CN); ZHAO, Wenchang, Shenzhen, Guangdong 518129 (CN); ZHANG, Tienan, Shenzhen, Guangdong 518129 (CN); LI, Chunjian, Shenzhen, Guangdong 518129 (CN); GUO, Li, Shenzhen, Guangdong 518129 (CN)
(74) Representative: Gill Jennings & Every LLP
(86) International application number: PCT/CN2023/128299
(87) International publication number: WO 2024/109482

(57) **Abstract**

This application provides a wearable sound pickup device and a sound pickup method. The wearable sound pickup device includes: a wearable sound pickup device body, where the wearable sound pickup device body includes an extension component; a sound pickup unit array installed inside the wearable sound pickup device body and configured for long-distance sound pickup, where the sound pickup unit array includes at least two sound pickup units, and an arrangement direction of each sound pickup unit is consistent with an extension direction of the extension component; and a processor connected to the sound pickup unit array. The wearable sound pickup device provided in this application can collect, by using the sound pickup unit array, a sound of a wearer, an ambient sound, and/or a sound produced by a specified target, and process and output the collected sound by using the processor connected to the sound pickup unit array. **In** this way, the wearable sound pickup device obtains a sound pickup capability beyond a hearing distance of a human ear by using the sound pickup unit array. This helps the wearer hear a distant sound or collect a long-distance audio signal, improving user experience.

## Description

This application claims priority to Chinese Patent Application No. 202211492934.2, filed with the China National Intellectual Property Administration on November 25, 2022 and entitled "WEARABLE SOUND PICKUP DEVICE AND SOUND PICKUP METHOD", which is incorporated herein by reference in its entirety.

### TECHNICAL FIELD

This application relates to the sound pickup field, and specifically, to a wearable sound pickup device and a sound pickup method.

### BACKGROUND

In general scenarios, volume of a normal conversation between people is about 40 decibels, and a hearing distance of a human ear is about 5 meters. Two or three sound pickup units are usually disposed in an existing smart glasses product and a hearing aid product, and mainly aim to pick up a sound of a wearer or a sound near the wearer. It is difficult for the sound pickup units to provide a sound pickup capability beyond the hearing distance of the human ear.

Therefore, how to provide a wearable sound pickup device capable of long-distance sound pickup is a technical problem to be resolved by a person skilled in the art.

### SUMMARY

To resolve a problem in a conventional technology that a wearable sound pickup device cannot provide a sound pickup capability beyond a hearing distance of a human ear, this application provides a wearable sound pickup device and a sound pickup method.

According to a first aspect, this technical solution provides a wearable sound pickup device, including: a wearable sound pickup device body, where the wearable sound pickup device body includes an extension component; a sound pickup unit array installed inside the wearable sound pickup device body and configured for long-distance sound pickup, where the sound pickup unit array includes at least two sound pickup units, and an arrangement direction of each sound pickup unit in the sound pickup unit array is consistent with an extension direction of the extension component; and a processor connected to the sound pickup unit array. In some embodiments of this application, the wearable sound pickup device can collect, by using the sound pickup unit array installed inside the wearable sound pickup device body, a sound of a wearer, an ambient sound, and/or a sound produced by a specified target, and process and output the collected sound by using the processor connected to the sound pickup unit array. In this way, the wearable sound pickup device obtains a sound pickup capability beyond a hearing distance of a human ear by using the sound pickup unit array. This helps the wearer hear a distant sound or collect a long-distance audio signal, improving user experience.

With reference to the first aspect, in some implementations of the first aspect, the wearable sound pickup device is specifically smart glasses, and the extension component is a temple of the smart glasses; and for each sound pickup unit in the sound pickup unit array, a sound pickup channel that matches the sound pickup unit is disposed on the temple, and the sound pickup channel has at least one sound inlet hole. In some embodiments of this application, the sound pickup channel is a channel through which the sound pickup unit performs sound pickup, and after entering the sound pickup channel through the sound inlet hole, an external sound is picked up by the sound pickup unit. The sound pickup channel is used to change a sound pickup direction of the sound pickup unit and enhance sound pickup effect.

With reference to the first aspect, in some implementations of the first aspect, the sound pickup unit includes two sound pickup ports that are disposed opposite to each other, the sound pickup channel has two sound inlet holes located on an outer surface of the temple of the smart glasses, each sound inlet hole corresponds to one of the sound pickup ports, the sound inlet hole communicates with the corresponding sound pickup port through the sound pickup channel, and a direction of a straight line on which the two sound inlet holes are located is consistent with a direction of a straight line on which the temple of the smart glasses is located. In some embodiments, when a user wears the smart glasses, sounds above and below the user reach the two sound inlet holes at consistent distances. In this case, sounds that simultaneously enter the sound pickup channel from the two sound inlet holes cancel each other out, and therefore the sound pickup unit cannot pick up the sounds, so that the sound pickup unit can shield the sounds above and below the user. In addition, a sound from a direction other than front and rear directions of the user is also diminished because sound components that exist above and below the user are canceled out. However, when the user wears the smart glasses, sounds from the front and the rear of the user reach the two sound inlet holes with a largest distance difference. Therefore, mutual interference between the sounds that enter the sound pickup channel from the two sound inlet holes, that is, from the front and the rear, is the smallest, and the sound pickup unit can pick up a sound with smallest interference, so that the sound pickup unit can obtain best sound pickup effect when picking up the sounds from front and rear directions. The two sound inlet holes are disposed for the sound pickup channel of the sound pickup unit, so that the sound pickup unit may have a directional sound pickup capability.

With reference to the first aspect, in some implementations of the first aspect, the wearable sound pickup device further includes a sound pickup unit that is connected to the processor and that is installed inside a bridge connection frame of the smart glasses. In some embodiments, the sound pickup unit installed inside the bridge connection frame of the smart glasses is specially configured to pick up the sound of the wearer, to perform audio enhancement on the sound of the wearer during a call or audio recording.

With reference to the first aspect, in some implementations of the first aspect, a sound pickup channel of the sound pickup unit installed inside the bridge connection frame of the smart glasses has two sound inlet holes located on an outer surface of the bridge connection frame of the smart glasses, and a direction of a straight line on which the two sound inlet holes are located is vertically downward. In some embodiments, when a user wears the smart glasses, sounds from the front and the rear of the user reach the two sound inlet holes at consistent distances. In this case, sounds that simultaneously enter the sound pickup channel from the two sound inlet holes cancel each other out, and therefore the sound pickup unit cannot pick up the sounds, so that the sound pickup unit can shield the sounds from the front and the rear of the user. In addition, a sound from a direction other than front and rear directions of the user is also diminished because sound components that exist in the front and the rear of the user are canceled out. However, when the user wears the smart glasses, sounds above and below the user reach the two sound inlet holes with a largest distance difference. Therefore, mutual interference between the sounds that enter the sound pickup channel from the two sound inlet holes, that is, from the above and below, is the smallest, and the sound pickup unit can pick up a sound with smallest interference, so that the sound pickup unit can obtain best sound pickup effect when picking up the sounds above and below the user. The two sound inlet holes are disposed for the sound pickup channel of the sound pickup unit, so that the sound pickup unit may directionally pick up a sound of the user during speaking.

With reference to the first aspect, in some implementations of the first aspect, the sound pickup unit array is installed inside the temple of the smart glasses. In some embodiments, the sound pickup unit array is installed inside the temple of the smart glasses, so that a directional sound pickup capability is provided, and wearing discomfort, a negative impact on a wearer appearance, and the like caused by installation outside the smart glasses are avoided.

With reference to the first aspect, in some implementations of the first aspect, the wearable sound pickup device is specifically a wireless headset, and the extension component is a stem of the wireless headset; and the sound pickup unit array is installed inside the stem of the wireless headset. In some embodiments, the sound pickup unit array is installed inside the stem of the wireless headset, so that the sound pickup capability beyond the hearing distance of the human ear is provided, and wearing discomfort, a negative impact on a wearer appearance, and the like caused by installation outside the wireless headset are avoided.

With reference to the first aspect, in some implementations of the first aspect, for each sound pickup unit in the sound pickup unit array, a sound pickup channel that matches the sound pickup unit is disposed on the stem, and the sound pickup channel has at least one sound inlet hole. In some embodiments, the sound pickup channel is a channel through which the sound pickup unit performs sound pickup, and after entering the sound pickup channel through the sound inlet hole, an external sound is picked up by the sound pickup unit. The sound pickup channel is used to change a sound pickup direction of the sound pickup unit and enhance sound pickup effect.

With reference to the first aspect, in some implementations of the first aspect, the sound pickup channel has two sound inlet holes located on an outer surface of the stem of the wireless headset, and a direction of a straight line on which the two sound inlet holes are located is consistent with a direction of a straight line on which the stem of the wireless headset is located. In some embodiments, when a user wears the wireless headset, sounds from the front and the rear of the user reach the two sound inlet holes at consistent distances. In this case, sounds that simultaneously enter the sound pickup channel from the two sound inlet holes cancel each other out, and therefore the sound pickup unit cannot pick up the sounds, so that the sound pickup unit can shield the sounds from the front and the rear of the user. In addition, a sound from a direction other than upper and lower directions of the user is also diminished because sound components that exist in the front and the rear of the user are canceled out. However, sounds above and below the user reach the two sound inlet holes with a largest distance difference. Therefore, mutual interference between sounds that enter the sound pickup channel from the two sound inlet holes, that is, from the front and the rear, is the smallest, the sound pickup unit can pick up a sound with smallest interference, and the wireless headset can pick up the sound of the wearer more clearly and accurately.

With reference to the first aspect, in some implementations of the first aspect, each sound pickup unit in the sound pickup unit array is specifically a directional sound pickup unit. In some embodiments, the directional sound pickup unit is a sound pickup unit having high sensitivity to a specific angle, and the directional sound pickup unit may pick up a sound from a specific direction.

With reference to the first aspect, in some implementations of the first aspect, the wearable sound pickup device further includes a speaker connected to the processor. In some embodiments, an audio signal picked up by using the sound pickup unit array may be output in real time by using the speaker, to implement effect of directional sound enhancement in hearing aid.

According to a second aspect, this technical solution provides a sound pickup method, applied to the wearable sound pickup device according to any one of the foregoing implementations. The sound pickup method includes: in response to an input sound pickup instruction, collecting an audio signal in an environment by using a sound pickup unit array, where the audio signal includes a first audio signal and a second audio signal, a direction of the first audio signal is consistent with an extension direction of an extension component, and a direction of the second audio signal is inconsistent with the extension direction of the extension component; and enhancing, by using a processor, the first audio signal and suppressing, by using the processor, the second audio signal to obtain a processed audio signal, and outputting the processed audio signal. In some embodiments of this application, the first audio signal whose direction is consistent with the extension direction of the extension component and the second audio signal whose direction is inconsistent with the extension direction of the extension component in the environment are first collected by using the sound pickup unit array. Then, the processor enhances the first audio signal and suppresses the second audio signal, so that the first audio signal in a specific direction is stronger in the output audio signal, and the second audio signal in another direction is weaker, implementing directional sound pickup in the environment.

With reference to the second aspect, in some implementations of the second aspect, the outputting the processed audio signal includes: parsing, by using the processor, the sound pickup instruction to obtain a sound pickup task category, where the sound pickup task category includes a hearing aid task; and if the sound pickup task category is a hearing aid task, outputting the processed audio signal to a speaker. In some embodiments, the sound pickup task category in the sound pickup instruction may include a hearing aid task. In this case, the wearable sound pickup device may be considered as a long-distance hearing aid, and can pick up and amplify a sound that is beyond a hearing distance of a human ear, so that the wearer can clearly hear a distant sound. When the sound pickup task category in the sound pickup instruction is a hearing aid task, the processed audio signal may be output to the speaker.

With reference to the second aspect, in some implementations of the second aspect, the sound pickup task category includes a sound pickup assistance task, and the method further includes: if the sound pickup task category is a sound pickup assistance task, parsing, by using the processor, the sound pickup instruction to obtain a target device; and outputting the processed audio signal to the target device by using a wireless communication module. In some embodiments, the sound pickup task category in the sound pickup instruction may alternatively include a sound pickup assistance task. When the sound pickup task category in the sound pickup instruction is a sound pickup assistance task, the processed audio signal may be output to the target device. In other words, in this case, the wearable sound pickup device may be considered as a long-distance auxiliary sound pickup unit for sound reception, and can assist a video recording device like a mobile phone or a camera in sound reception, further improving sound reception effect.

### BRIEF DESCRIPTION OF DRAWINGS

To describe the technical solutions in embodiments of this application more clearly, the following briefly describes the accompanying drawings used for embodiments. It is clear that the accompanying drawings in the following description are merely some embodiments of this application, and a person of ordinary skill in the art may still derive other drawings from these accompanying drawings without creative efforts.
FIG. 1 is a diagram of smart glasses according to this application;
FIG. 2 is a diagram of a hearing aid according to this application;
FIG. 3 is a diagram of a structure of a wearable sound pickup device 100 according to an embodiment of this application;
FIG. 4 is a diagram of a structure of another wearable sound pickup device 100 according to an embodiment of this application;
FIG. 5 is a diagram of a structure of smart glasses according to an embodiment of this application;
FIG. 6 is a diagram of an internal structure of a temple of the smart glasses in FIG. 5 on a first cross section;
FIG. 7 is a cross-sectional view of a temple of the smart glasses in FIG. 5 on a first cross section;
FIG. 8 is a diagram of an internal structure of a temple of the smart glasses in FIG. 5 on a second cross section;
FIG. 9 is a cross-sectional view of a temple of the smart glasses in FIG. 5 on a second cross section;
FIG. 10 is a vertical cross-sectional view of a bridge connection frame of smart glasses according to an embodiment of this application;
FIG. 11 is a diagram of a structure of a wireless headset according to an embodiment of this application;
FIG. 12 is a diagram in which a wireless headset performs long-distance sound pickup according to an embodiment of this application;
FIG. 13 is a flowchart of a sound pickup method according to an embodiment of this application;
FIG. 14 is a diagram of audio signal processing according to an embodiment of this application;
FIG. 15 is a schematic flowchart of sound pickup assistance by using a wearable sound pickup device according to an embodiment of this application;
FIG. 16A to FIG. 16C are a diagram of a scenario of selecting smart glasses for sound pickup assistance according to an embodiment of this application;
FIG. 17 is a diagram of a scenario of performing sound pickup assistance by using smart glasses according to an embodiment of this application; and
FIG. 18 is a diagram of a scenario of aiding hearing by using smart glasses according to an embodiment of this application.

### DESCRIPTION OF EMBODIMENTS

To better understand technical solutions of this application, the following describes embodiments of this application in detail with reference to the accompanying drawings.

It should be clear that the described embodiments are merely a part rather than all of embodiments of this application. All other embodiments obtained by a person of ordinary skill in the art based on embodiments of this application without creative efforts shall fall within the protection scope of this application.

The terms used in embodiments of this application are merely for the purpose of illustrating specific embodiments, and are not intended to limit this application. The terms "a", "said" and "the" of singular forms used in embodiments and the appended claims of this application are also intended to include plural forms, unless otherwise specified in the context clearly.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In general scenarios, volume of a normal conversation between people is about 40 decibels, and a hearing distance of a human ear is about 5 meters. Two or three sound pickup units are usually disposed in an existing smart glasses product and a hearing aid product, and mainly aim to pick up a sound of a wearer or a sound near the wearer. It is difficult for the sound pickup units to provide a sound pickup capability beyond the hearing distance of the human ear.

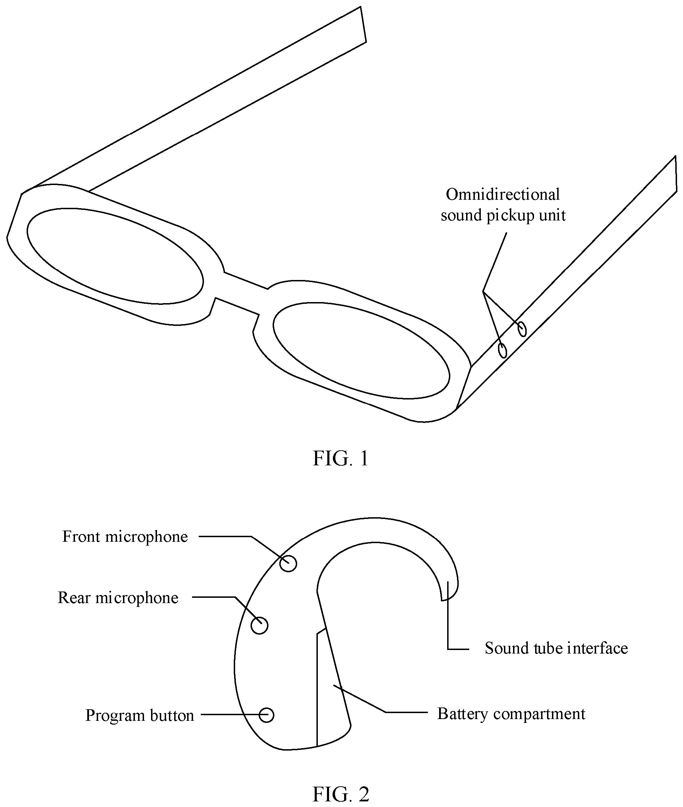

For example, FIG. 1 is a diagram of smart glasses according to this application. Two omnidirectional sound pickup units are disposed on each of two temples of the glasses, so that the glasses have a sound pickup capability and may be used as a hearing aid or a headset. However, the smart glasses primarily focus on an assistive listening function, and have a capability of picking up surrounding and front sounds. However, a sound pickup range is limited. Common hearing aid glasses and a common hearing aid usually have an assistive listening capability approximately similar to a hearing capability of a normal person, and cannot implement an assistive listening function beyond a hearing range of the normal person.

For example, FIG. 2 is a diagram of a hearing aid according to this application. An existing hearing aid is usually designed as a single-sided single sound pickup unit or single-sided dual sound pickup units. The hearing aid is worn on an ear, and a sound tube is inserted into an ear canal entrance. However, a sound pickup range of the hearing aid is limited, generally within 2 m to 3 m. In addition, this external hearing aid needs to be inserted into an ear canal, and is not comfortable to wear, greatly affecting user experience.

Therefore, this application provides a wearable sound pickup device, to resolve the foregoing problem.

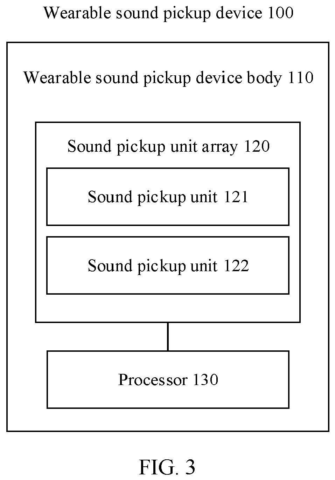

FIG. 3 is a diagram of a structure of a wearable sound pickup device 100 according to an embodiment of this application.

As shown in FIG. 3, the wearable sound pickup device 100 includes: a wearable sound pickup device body 110, where the wearable sound pickup device body 110 includes an extension component; a sound pickup unit array 120 installed inside the wearable sound pickup device body 110 and configured for long-distance sound pickup, where the sound pickup unit array 120 includes at least two sound pickup units 121 and 122, and an arrangement direction of each sound pickup unit in the sound pickup unit array 120 is consistent with an extension direction of the extension component; and a processor 130 connected to the sound pickup unit array 102.

It may be understood that the structure shown in this embodiment of this application does not constitute a specific limitation on the wearable sound pickup device 100. In some other embodiments of this application, the wearable sound pickup device 100 may include more or fewer components than those shown in the figure, or some components may be combined, or some components may be split, or a different component arrangement may be used. The components in the figure may be implemented by hardware, software, or a combination of software and hardware.

The wearable sound pickup device body 110 may include but is not limited to devices such as smart glasses, a wireless headset, VR (Virtual Reality, virtual reality technology) glasses, and AR (Augmented Reality, augmented Reality) glasses, and can collect, by using the sound pickup unit array 120 installed inside the wearable sound pickup device body 110, a sound of a wearer, an ambient sound, and/or a sound produced by a specified target, and process the collected sound by using the processor 130 connected to the sound pickup unit array 120.

The sound pickup unit array 120 is installed inside the wearable sound pickup device body 110, and the arrangement direction of each sound pickup unit in the sound pickup unit array is set to be consistent with the extension direction of the extension component, so that the sound pickup unit array 120 may implement a sound pickup capability beyond a hearing distance of a human ear. The sound pickup unit array 120 may include two sound pickup units, or a plurality of sound pickup units. A quantity of sound pickup units may be determined based on expected sound pickup effect and an internal volume of the wearable sound pickup device body 100.

The sound pickup unit array 120 may be all formed by omnidirectional sound pickup units or directional sound pickup units, or may be formed by both an omnidirectional sound pickup unit and a directional sound pickup unit. Components of the sound pickup unit array 120 may be specifically determined based on expected sound pickup effect and an expected sound pickup direction.

The processor 130 processes the collected sound.

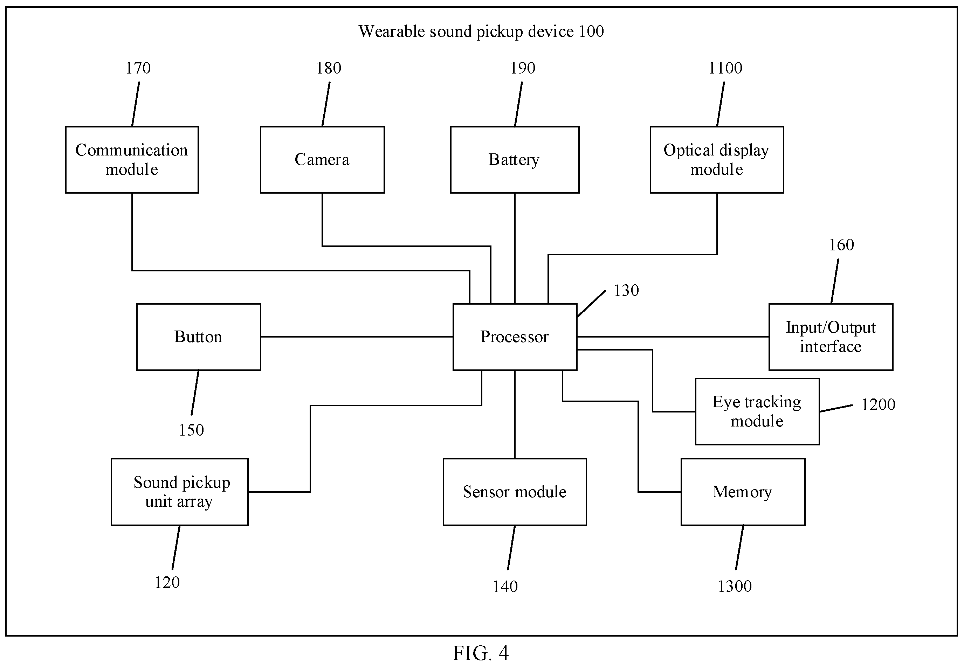

In some embodiments, FIG. 4 is a diagram of a structure of another wearable sound pickup device 100 according to an embodiment of this application.

As shown in FIG. 4, the wearable sound pickup device 100 may include a processor 130, a sensor module 140 (for example, may be configured to obtain a posture of a user), a sound pickup unit array 120, a button 150, an input/output interface 160, a communication module 170, a camera 180, a battery 190, an optical display module 1100, an eye tracking module 1200, a memory 1300, and the like.

The processor 130 is usually configured to control an overall operation of the wearable sound pickup device 100, and may include one or more processing units. For example, the processor 130 may include an application processor (application processor, AP), a modem processor, a graphics processing unit (graphics processing unit, GPU), an image signal processor (image signal processor, ISP), a video processing unit (video processing unit, VPU) controller, a memory, a video codec, a digital signal processor (digital signal processor, DSP), a baseband processor, a neural network processing unit (neural network processing unit, NPU), and/or the like. Different processing units may be separate devices, or may be integrated into one or more processors.

A memory may be further disposed in the processor 130, and is configured to store instructions and data. In some embodiments, the memory in the processor 130 is a cache memory. The memory may store an instruction or data that has been used or cyclically used by the processor 130. If the processor 130 needs to use the instructions or the data again, the processor 130 may directly invoke the instructions or the data from the memory. This avoids repeated access, and reduces waiting time of the processor 130, improving system efficiency.

In some embodiments of this specification, the processor 130 may be configured to control focal power of the wearable sound pickup device 100. For example, the processor 130 may be configured to control focal power of the optical display module 1100, to implement a function of adjusting focal power of a head mounted display device 100. For example, the processor 130 may adjust relative positions between optical devices (such as a lens) in the optical display module 1100, to adjust the focal power of the optical display module 1100, so that a position of a corresponding virtual image plane may be adjusted when the optical display module 1100 performs imaging for a human eye. This implements effect of controlling the focal power of the head mounted display device 100.

In some embodiments, the processor 130 may include one or more interfaces. The interface may include an inter-integrated circuit (inter-integrated circuit, I2C) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, and a subscriber identity module (subscriber identity module, SIM) interface, and/or a universal serial bus (universal serial bus, USB) port, a serial peripheral interface (serial peripheral interface, SPI) interface, and the like.

The I2C interface is a two-way synchronization serial bus, and includes one serial data line (serial data line, SDA) and one serial clock line (serial clock line, SCL). In some embodiments, the processor 130 may include a plurality of groups of I2C buses.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 130 to the communication module 170. For example, the processor 130 communicates with a Bluetooth module in the communication module 170 through the UART interface, to implement a Bluetooth function.

The MIPI interface may be configured to connect the processor 130 to a peripheral device like a display device in the optical display module 1100, or the camera 180.

The GPIO interface may be configured by software. The GPIO interface may be configured as a control signal or a data signal. In some embodiments, the GPIO interface may be configured to connect the processor 130 to the camera 180, a display device in the optical display module 1100, a communication module 170, a sensor module 140, a sound pickup unit array 120, and the like. The GPIO interface may alternatively be configured as an I2C interface, an I2S interface, a UART interface, a MIPI interface, or the like. In some embodiments, the camera 180 may collect an image including a real object, and the processor 130 may fuse the image collected by the camera and a virtual object, and display an image obtained through fusion by using the optical display module 1100. In some embodiments, the camera 180 may further collect an image including a human eye. The processor 130 performs eye tracking by using the image.

The USB port is an interface that conforms to a USB standard specification, and may be specifically a mini USB port, a micro USB port, a USB type-C port, or the like. The USB port may be used to be connected to the charger to charge the wearable sound pickup device 100, or may be used to transmit data between the wearable sound pickup device 100 and a peripheral device, or may be configured to connect to a headset for playing audio through the headset. The interface may be further configured to be connected to another electronic device, for example, a mobile phone, or the like. The USB port may be a USB 3.0, and is configured to be compatible with a high-speed display port (display port, DP) for signal transmission, and may transmit high-speed audio and video data.

It may be understood that an interface connection relationship between the modules shown in this embodiment of this application is merely an example for description, and does not constitute a limitation on the structure of the head mounted display device 100. In some other embodiments of this specification, the head mounted display device 100 may alternatively use an interface connection manner different from that in the foregoing embodiment, or use a combination of a plurality of interface connection manners.

In addition, the wearable sound pickup device 100 may include a wireless communication function. For example, the wearable sound pickup device 100 may receive an image from another electronic device (for example, a VR host) for display, or the wearable sound pickup device 100 may directly obtain data from a station like a base station. The communication module 170 may include a wireless communication module and a mobile communication module. The wireless communication function may be implemented by using an antenna (not shown), a mobile communication module (not shown), a modem processor (not shown), a baseband processor (not shown), and the like. The antenna is configured to transmit and receive electromagnetic wave signals. The wearable sound pickup device 100 may include a plurality of antennas, and each antenna may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module may provide a wireless communication solution that is applied to the wearable sound pickup device 100, and that includes a 2nd generation (2nd generation, 2G) network, a 3rd generation (3rd generation, 3G) network, a 4th generation (4th generation, 4G) network, a 5th generation (5th generation, 5G) network, a 6th generation (6th generation, 6G) network, and the like. The mobile communication module may include at least one filter, a switch, a power amplifier, a low noise amplifier (low noise amplifier, LNA), and the like. The mobile communication module may receive an electromagnetic wave by using the antenna, perform processing such as filtering and amplification on the received electromagnetic wave, and send a processed electromagnetic wave to the modem processor for demodulation. The mobile communication module may further amplify a signal modulated by the modem processor, and convert the signal into an electromagnetic wave for radiation through the antenna. In some embodiments, at least some functional modules of the mobile communication module may be disposed in the processor 130. In some embodiments, at least some functional modules of the mobile communication module and at least some modules of the processor 130 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to a speaker or the like), or displays an image or a video by using the display device in the optical display module 1100. In some embodiments, the modem processor may be an independent device. In some other embodiments, the modem processor may be independent of the processor 130, and is disposed in a same device as a mobile communication module or another functional module.

The wireless communication module may provide a wireless communication solution that is applied to the wearable sound pickup device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module may be one or more devices that integrate at least one communication processing module. The wireless communication module receives an electromagnetic wave through an antenna, performs frequency modulation and filtering on an electromagnetic wave signal, and sends the processed signal to the processor 130. The wireless communication module may further receive a to-be-sent signal from the processor 130, perform frequency modulation and amplification on the signal, and convert the signal into an electromagnetic wave for radiation through the antenna.

In some embodiments, the antenna of the wearable sound pickup device 100 is coupled to the mobile communication module, so that the wearable sound pickup device 100 may communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), 5G, 6G, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), and a quasi-zenith satellite system (quasi-zenith satellite system, QZSS), and/or a satellite based augmentation system (satellite based augmentation systems, SBAS).

The wearable sound pickup device 100 implements a display function by using the GPU, the optical display module 1100, the application processor, and the like. The GPU is a microprocessor for image processing, and is connected to the optical display module 1100 and the application processor. The GPU is configured to: perform mathematical and geometric computation, and render an image. The processor 130 may include one or more GPUs, and the GPU executes program instructions to generate or change displayed information.

The memory 1300 may be configured to store computer-executable program code. The executable program code includes instructions. The processor 130 runs the instructions stored in the memory 1300, to perform various function applications and data processing of the wearable sound pickup device 100. The memory 1300 may include a program storage area and a data storage area. The program storage area may store an operating system, an application required by at least one function (for example, a sound playing function or an image playing function), and the like. The data storage area may store data (such as audio data and an address book) created during use of the head mounted display device 100. In addition, the memory 1300 may include a high-speed random access memory, and may further include a non-volatile memory, for example, at least one magnetic disk storage device, a flash memory device, or a universal flash storage (universal flash storage, UFS).

The wearable sound pickup device 100 may implement an audio function, for example, music playing and audio recording, by using the audio module, the speaker, the sound pickup unit array 120, the headset jack, the application processor, and the like. The audio module is configured to convert digital audio information into analog audio signal output, and is further configured to convert analog audio input into a digital audio signal. The audio module may be further configured to: encode and decode an audio signal. In some embodiments, the audio module may be disposed in the processor 130, or some functional modules of the audio module are disposed in the processor 130. The speaker, also referred to as a "loudspeaker", is configured to convert an electrical audio signal into a sound signal. Music may be listened to or a hands-free call may be answered by using the speaker in the head mounted display device 100.

The sound pickup unit array 120 is configured to convert a sound signal into an electrical signal. At least one sound pickup unit array 120 may be disposed on the wearable sound pickup device 100. In some other embodiments, two sound pickup unit arrays 120 may be disposed on the wearable sound pickup device 100, to collect a sound signal and further implement a noise reduction function. In some other embodiments, three, four, or more sound pickup unit arrays 120 may alternatively be disposed on the wearable sound pickup device 100, to collect a sound signal, reduce noise, identify a sound source, implement a directional audio recording function, and the like.

The headset jack is configured to connect to a wired headset. The headset jack may be the USB port, or may be a 3.5 millimeters (mm) open mobile head mounted display device platform (open mobile terminal platform, OMTP) standard interface, or a cellular telecommunications industry association of the USA (cellular telecommunications industry association of the USA, CTIA) standard interface.

In some embodiments, the wearable sound pickup device 100 may include one or more buttons 150. These buttons may control the wearable sound pickup device, and provide a function of interacting with the wearable sound pickup device 100 for a user. The button 150 may be in a form of a button, a switch, a dial, and a touch or near-touch sensing device (for example, a touch sensor). Specifically, for example, the user may start the optical display module 1100 of the wearable sound pickup device 100 by pressing a button. The button 150 includes a power button, a volume button, and the like. The button 150 may be a mechanical button, or a touch button. The head mounted display device 100 may receive a button input, and generate a button signal input related to user settings and function control of the head mounted display device 100.

In some embodiments, the wearable sound pickup device 100 may include the input/output interface 160, and the input/output interface 160 may connect another apparatus to the wearable sound pickup device 100 through an appropriate component. The component may include, for example, an audio/video jack, a data connector, and the like.

The optical display module 1100 is configured to present an image to the user under control of the processor 130. The optical display module 1100 may convert, by using one or more optical devices such as a reflection mirror, a transmission mirror, or an optical waveguide, a real pixel image into a near-eye projected virtual image for display, to implement virtual interaction experience or implement interaction experience combining virtual and reality. For example, the optical display module 1100 receives image data information sent by the processor 130, and presents a corresponding image to the user.

For example, the optical display module 1100 includes two display devices: a display device 110 and a display device 120. Alternatively, for example, the optical display module 1100 includes a display module 1 and a display module 2, the display module 1 includes the display device 110 and an optical device 130, and the display module 2 includes the display device 120 and an optical device 140.

In some embodiments, the wearable sound pickup device 100 may further include an eye tracking module 1200. The eye tracking module 1200 is configured to track movement of a human eye, to determine a gaze point of the human eye. For example, by using an image processing technology, a pupil position may be located, and pupil center coordinates may be obtained, to calculate a gaze point of a person. In some embodiments, this eye tracking system may determine a gaze point position of the user (or determine a line-of-sight direction of the user) by using a method like video-oculography, a photodiode response method, or a pupil corneal reflection method, to implement eye tracking of the user.

In some embodiments, an example in which the line-of-sight direction of the user is determined by using the pupil corneal reflection method is used. The eye tracking system may include one or more near-infrared light-emitting diodes (Light-Emitting Diodes, LEDs) and one or more near-infrared cameras. The near-infrared LED and the near-infrared camera are not shown in FIG. 4. In different examples, the near-infrared LED may be disposed around the optical device, to fully illuminate the human eye. In some embodiments, a center wavelength of the near-infrared LED may be 850 nm or 940 nm. The eye tracking system may obtain the line-of-sight direction of the user by using the following method: The near-infrared LED illuminates the human eye, the near-infrared camera shoots an eyeball image, and then an optical axis direction of an eyeball is determined based on a position of a reflection point of the near-infrared LED on a cornea and a center of a pupil in the eyeball image, to obtain the line-of-sight direction of the user.

It should be noted that, in some embodiments of this specification, an eye tracking system corresponding to each eye of the user may be disposed, to synchronously or asynchronously perform eye tracking on eyes. In some other embodiments of this specification, an eye tracking system may alternatively be disposed only near a single eye of the user, a line-of-sight direction of a corresponding human eye is obtained by using the eye tracking system, and a line-of-sight direction or a line-of-sight position of the other eye of the user may be determined based on a relationship between gaze points of the two eyes (for example, when the user observes an object by using the two eyes, the gaze points of the two eyes are usually close to or the same as each other) and a distance between the two eyes of the user.

It may be understood that the structure shown in this embodiment of this application does not constitute a specific limitation on the wearable sound pickup device 100. In some other embodiments of this specification, the wearable sound pickup device 100 may include more or fewer components than those shown in FIG. 4, or some components may be combined, or some components may be split, or a different component arrangement may be used. This is not limited in this embodiment of this application.

In some embodiments, when the wearable sound pickup device 100 is specifically smart glasses, the extension component is a temple of the smart glasses; and for each sound pickup unit in the sound pickup unit array 120, a sound pickup channel that matches the sound pickup unit is disposed on the temple, and the sound pickup channel has at least one sound inlet hole. The sound pickup channel is a channel through which the sound pickup unit performs sound pickup, and after entering the sound pickup channel through the sound inlet hole, an external sound is picked up by the sound pickup unit. The sound pickup channel is used to change a sound pickup direction of the sound pickup unit and enhance sound pickup effect.

In some embodiments, the sound pickup unit array may be all formed by omnidirectional sound pickup units or directional sound pickup units, or may be formed by both an omnidirectional sound pickup unit and a directional sound pickup unit. Components of the sound pickup unit array may be specifically determined based on expected sound pickup effect and an expected sound pickup direction. The omnidirectional sound pickup unit is a sound pickup unit having same sensitivity to all angles, and may evenly pick up sounds from all directions. The directional sound pickup unit is a sound pickup unit having high sensitivity to a specific angle, and the directional sound pickup unit may pick up a sound from a specific direction.

For example, the sound pickup unit array may have four omnidirectional sound pickup units, configured to pick up sounds in all directions around the wearer. The sound pickup unit array may have four directional sound pickup units, configured to pick up sounds in all directions around the wearer. The sound pickup unit array may alternatively include two omnidirectional sound pickup units and two directional sound pickup units. A first sound pickup unit and a third sound pickup unit may be omnidirectional sound pickup units, and a second sound pickup unit and a fourth sound pickup unit may be directional sound pickup units. These sound pickup units are configured to pick up sounds in all directions around the wearer.

In some embodiments, for example, an unbent part of the temple of the smart glasses is a cuboid. When the user wears the smart glasses, the temple has an inner surface that is in direct contact with skin of the wearer, and three outer surfaces that are not in direct contact with the skin of the wearer, including two upper and lower outer surfaces adjacent to the inner surface, and one outer surface that is not adjacent to the inner surface. The sound inlet hole of the sound pickup channel may be located on any outer surface, and sound inlet holes of different sound pickup channels may be located on a same outer surface, or may be located on different outer surfaces. Further, when the temple of the smart glasses is a cylinder or another polyhedron, it may be considered that a part that is directly in contact with the skin of the wearer is an inner surface, and a part that is not directly in contact with the skin of the wearer is an outer surface.

In some embodiments, the sound pickup channel may have one or more sound inlet holes. For example, when there is one sound inlet hole, a sound from each direction may be picked up by a sound pickup unit. Therefore, the sound pickup unit may pick up all sounds around the wearer in all directions, increasing a sound pickup range. When the smart glasses are used as a hearing aid device like a hearing aid, the smart glasses may better assist the wearer in hearing a surrounding sound. When the smart glasses are used as a sound pickup assistance device like a mike, the smart glasses may better collect an ambient sound when a mobile phone is used to record a video.

Further, when there are two sound inlet holes, a straight line on which the two sound inlet holes are located is directional. If a direction of the straight line on which the two sound inlet holes are located is consistent with a direction of a straight line on which the temple is located, when the user wears the smart glasses, sounds above and below the user reach the two sound inlet holes at consistent distances. In this case, sounds that simultaneously enter the sound pickup channel from the two sound inlet holes cancel each other out, and therefore the sound pickup unit cannot pick up the sounds, so that the sound pickup unit can shield the sounds above and below the user. In addition, a sound from a direction other than front and rear directions of the user is also diminished because sound components that exist above and below the user are canceled out.

However, when the user wears the smart glasses, sounds from the front and the rear of the user reach the two sound inlet holes with a largest distance difference. Therefore, mutual interference between the sounds that enter the sound pickup channel from the two sound inlet holes, that is, from the front and the rear, is the smallest, and the sound pickup unit can pick up a sound with smallest interference, so that the sound pickup unit can obtain best sound pickup effect when picking up the sounds from front and rear directions. The two sound inlet holes are disposed for the sound pickup channel of the sound pickup unit, so that the sound pickup unit may have a directional sound pickup capability.

Further, the direction of the straight line on which the two sound inlet holes of the sound pickup channel of the sound pickup unit are located may alternatively be inconsistent with the direction of the straight line on which the temple is located. This is not specifically limited in this application. For example, a straight line on which two sound inlet holes of a sound pickup channel of one or more sound pickup units in the sound pickup unit array are located may alternatively be set to a vertical direction, to implement directional sound pickup above and below the wearer. A straight line on which two sound inlet holes of a sound pickup channel of one or more sound pickup units in the sound pickup unit array are located may alternatively be set to a specific direction (for example, tilted upward or downward by a specific angle), to implement directional sound pickup from the specific direction.

In some embodiments, the sound pickup channel of the sound pickup unit may alternatively have three or more sound pickup holes. When all the sound pickup holes are located on a same straight line, the sound pickup unit has a directional sound pickup capability, and a sound pickup direction is a direction of the straight line on which all the sound pickup holes are located.

In some embodiments, for each sound pickup unit in the sound pickup unit array, quantities of sound inlet holes of a sound pickup channel corresponding to the sound pickup unit may be the same or may be different. This is not specifically limited in this application. For example, the sound pickup unit array may have four sound pickup units, and a sound pickup channel of each of the first sound pickup unit and the third sound pickup unit may have one sound inlet hole, configured to implement omnidirectional sound pickup. A sound pickup channel of each of the second sound pickup unit and the fourth sound pickup unit may have two sound inlet holes, configured to implement directional sound pickup.

Further, in some embodiments, for each sound pickup unit in the sound pickup unit array, when each sound pickup channel corresponding to the sound pickup unit has two sound inlet holes, sound inlet holes of sound pickup channels corresponding to different sound pickup units may be on a same straight line, or on different straight lines. This is not specifically limited in this application. For example, the sound pickup unit array may have four sound pickup units. Two sound inlet holes of a sound pickup channel of the first sound pickup unit and two sound inlet holes of a sound pickup channel of the second sound pickup unit may be on a same straight line, and a direction of the straight line is consistent with the direction of the temple. This implements directional sound pickup from front and rear directions of the wearer. A straight line on which two sound inlet holes of a sound pickup channel of the third sound pickup unit are located may be parallel to the straight line on which the sound inlet holes of the sound pickup channels of the first sound pickup unit and the second sound pickup unit are located. This also implements directional sound pickup from the front and rear directions of the wearer. A straight line on which two sound inlet holes of a sound pickup channel of the fourth sound pickup unit are located may point to a vertical direction. This implements directional sound pickup from upper and lower directions of the wearer.

Based on the foregoing embodiment, in some embodiments, the sound pickup unit array 102 may be specifically installed inside the temple of the smart glasses, so that a directional sound pickup capability is provided, and wearing discomfort, a negative impact on a wearer appearance, and the like caused by installation outside the smart glasses are avoided.

Based on the foregoing embodiment, in some embodiments, the wearable sound pickup device 100 may further include a sound pickup unit that is connected to the processor 130 and that is installed inside a bridge connection frame of the smart glasses. In the embodiments, the sound pickup unit installed inside the bridge connection frame of the smart glasses is specially configured to pick up the sound of the wearer, to perform audio enhancement on the sound of the wearer during a call or audio recording.

In some embodiments, a sound pickup channel of the sound pickup unit installed inside the bridge connection frame of the smart glasses may alternatively have one or more sound inlet holes. When there is one sound inlet hole, a sound from each direction may be picked up by a sound pickup unit. Therefore, the sound pickup unit may pick up all sounds around the wearer in all directions, increasing a sound pickup range. When the smart glasses are used as a hearing aid device like a hearing aid, the smart glasses may better assist the wearer in hearing a surrounding sound. When the smart glasses are used as a sound pickup assistance device like a mike, the smart glasses may better collect an ambient sound when a mobile phone is used to record a video.

Further, when the sound pickup channel of the sound pickup unit installed inside the bridge connection frame of the smart glasses has two sound inlet holes, and the user wears the smart glasses, sounds from the front and the rear of the user reach the two sound inlet holes at consistent distances. In this case, sounds that simultaneously enter the sound pickup channel from the two sound inlet holes cancel each other out, and therefore the sound pickup unit cannot pick up the sounds, so that the sound pickup unit can shield the sounds from the front and the rear of the user. In addition, a sound from a direction other than front and rear directions of the user is also diminished because sound components that exist in the front and the rear of the user are canceled out.

However, when the user wears the smart glasses, sounds above and below the user reach the two sound inlet holes with a largest distance difference. Therefore, mutual interference between the sounds that enter the sound pickup channel from the two sound inlet holes, that is, from the above and below, is the smallest, and the sound pickup unit can pick up a sound with smallest interference, so that the sound pickup unit can obtain best sound pickup effect when picking up the sounds above and below the user. The two sound inlet holes are disposed for the sound pickup channel of the sound pickup unit, so that the sound pickup unit may directionally pick up a sound of the user during speaking.

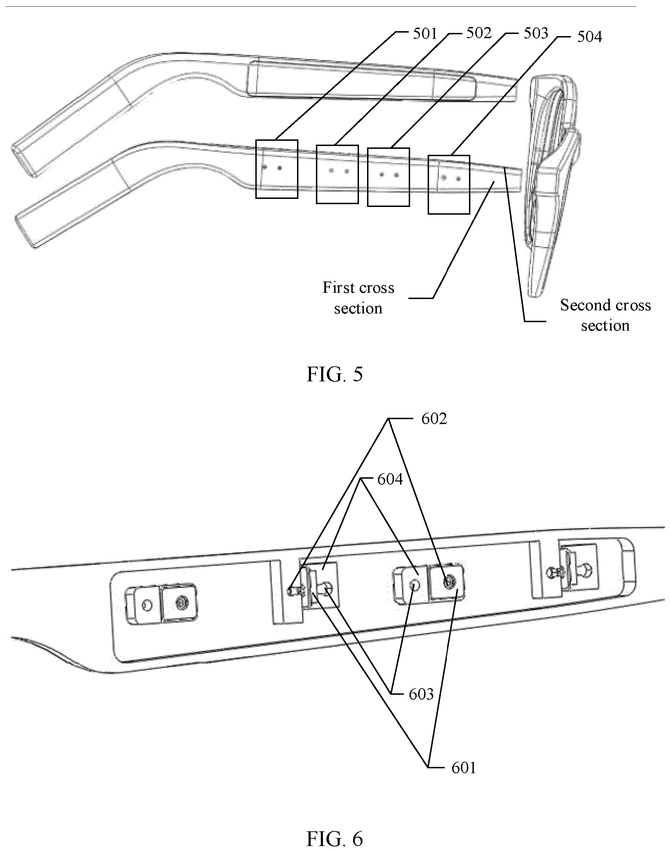

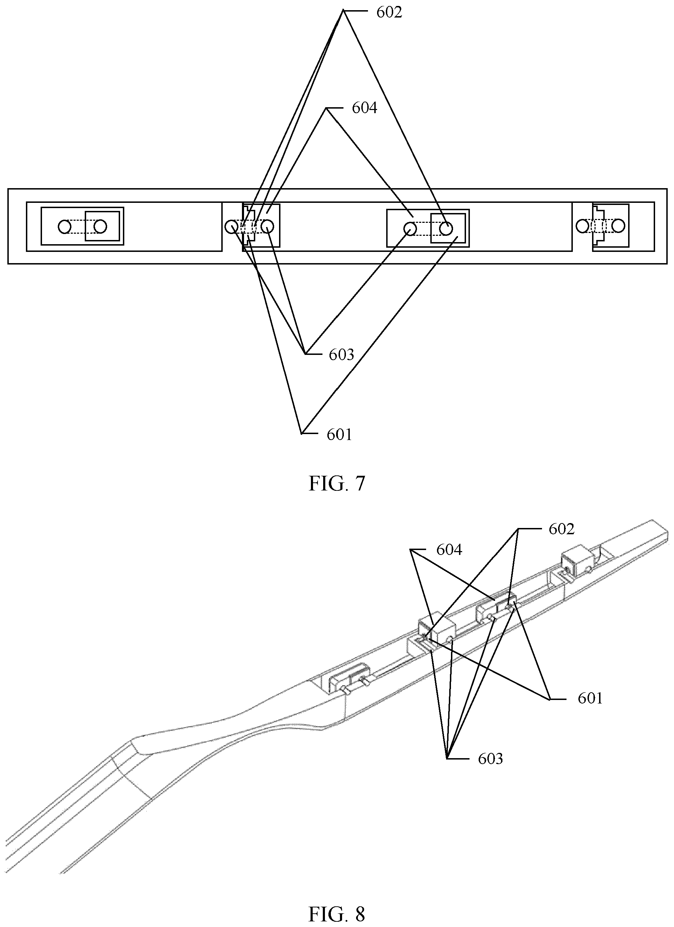

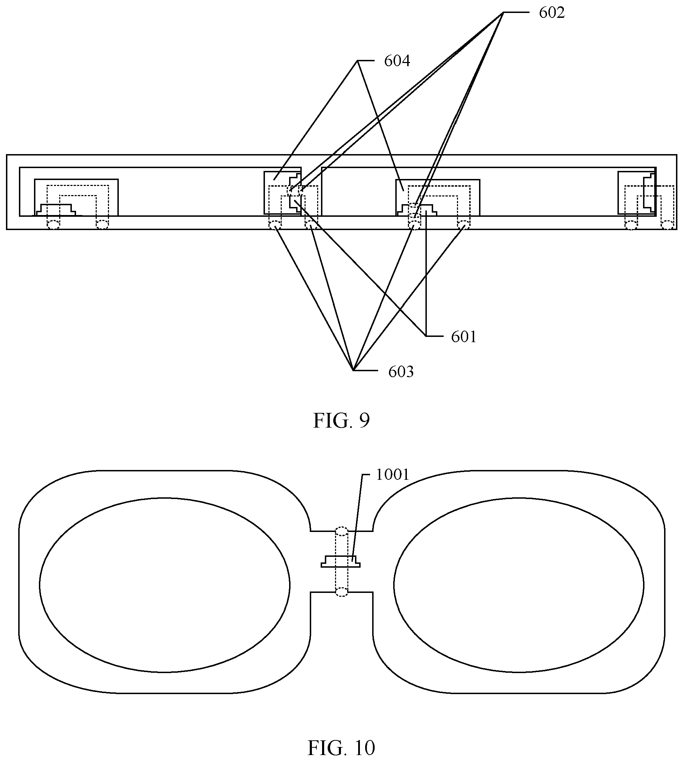

For example, refer to FIG. 5, FIG. 6, FIG. 7, FIG. 8, FIG. 9, and FIG. 10. FIG. 5 is a diagram of a structure of smart glasses according to an embodiment of this application. FIG. 6 is a diagram of an internal structure of a temple of the smart glasses in FIG. 5 on a first cross section. FIG. 7 is a cross-sectional view of a temple of the smart glasses in FIG. 5 on a first cross section. FIG. 8 is a diagram of an internal structure of a temple of the smart glasses in FIG. 5 on a second cross section. FIG. 9 is a cross-sectional view of a temple of the smart glasses in FIG. 5 on a second cross section. FIG. 10 is a vertical cross-sectional view of a bridge connection frame of smart glasses according to an embodiment of this application.

Nine directional sound pickup units are disposed on the smart glasses provided in this embodiment. Eight sound pickup units are separately installed inside two temples. An arrangement direction of sound inlet holes of a sound pickup channel of a sound pickup unit is consistent with a direction of a straight line on which a temple of the smart glasses is located. Holes of sound pickup channels of sound pickup units on a temple are shown in FIG. 5. 501 is a first sound pickup unit, 502 is a second sound pickup unit, 503 is a third sound pickup unit, and 504 is a fourth sound pickup unit. Four sound pickup units are also installed inside the other temple. An arrangement of sound inlet holes on the temple is the same, and details are not described herein again. The first cross section is a plane on which an outer surface (a plane on which the sound inlet holes are located in the figure) of the temple of the smart glasses is located, and the second cross section is a plane on which an upper surface of the temple of the smart glasses is located.

As shown in FIG. 5, connection lines of all sound inlet holes of the sound pickup channels of the four sound pickup units are located on a same straight line, and a direction of the straight line is consistent with an extension direction of the temple. That is, a total of eight channel sound holes of the four sound pickup units on the temple are located on the same straight line, and the straight line points to front and rear directions of a wearer. When a user wears the smart glasses, sounds above and below the user reach two sound inlet holes at consistent distances. In this case, sounds that simultaneously enter a sound pickup channel from the two sound inlet holes cancel each other out, and therefore a sound pickup unit cannot pick up the sounds, so that the sound pickup unit can shield the sounds above and below the user. In addition, a sound from a direction other than front and rear directions of the user is also diminished because sound components that exist above and below the user are canceled out.

However, when the user wears the smart glasses, sounds from the front and the rear of the user reach the two sound inlet holes with a largest distance difference. Therefore, mutual interference between sounds that enter the sound pickup channel from the two sound inlet holes, that is, from the front and the rear, is the smallest, and the sound pickup unit can pick up a sound with smallest interference, so that the sound pickup unit can obtain best sound pickup effect when picking up the sounds from front and rear directions. The total of eight channel sound holes of the four sound pickup units on the temple are located on the same straight line, and the straight line points to the front and rear directions of the wearer, so that the smart glasses have a directional sound pickup capability, and can pick up an external signal from a long distance.

In some embodiments, at least two sound pickup units are disposed in the sound pickup unit array, to combine audio signals into one enhanced audio signal after a processor performs audio enhancement on the audio signals picked up by a plurality of sound pickup units. In addition, two sound inlet holes are provided for a sound pickup channel of a sound pickup unit with reference to the foregoing embodiment, so that the sound pickup unit has a directional sound pickup enhancement capability, and a wearable sound pickup device obtains a sound pickup capability beyond a hearing distance of a human ear. This helps the wearer hear a distant sound or collect a long-distance audio signal, improving user experience.

In some embodiments, that the processor performs audio enhancement on the audio signals picked up by the plurality of sound pickup units may be specifically performing super-directional beamforming on the audio signals picked up by the sound pickup unit array. Super-directional beamforming may be specifically implemented based on an optimized beamformer that controls amplification of white noise. A function of super-directional beamforming is to perform maximum directional beamforming under a constraint of avoiding or reducing amplification of the white noise. After beamforming, signals in four channels change into a signal in one channel. In this case, an input signal-to-noise ratio of the signal in one channel is higher than that of a signal in any channel of the original four channels, so that a collected long-distance audio signal is clearer, and user experience is further improved.

In some embodiments, the sound pickup unit includes two sound pickup ports that are disposed opposite to each other, the sound pickup channel has two sound inlet holes located on an outer surface of the temple of the smart glasses, each sound inlet hole corresponds to one of the sound pickup ports, the sound inlet hole communicates with the corresponding sound pickup port through the sound pickup channel, and a direction of a straight line on which the two sound inlet holes are located is consistent with a direction of a straight line on which the temple of the smart glasses is located.

Specifically, for irregular distribution, an uneven size, and the like that may exist in internal space of the temple, this embodiment provides structural designs for two styles of sound pickup units. As shown in FIG. 6, FIG. 7, FIG. 8, and FIG. 9, 601 represents a directional sound pickup unit, and an appearance and a shape of 601 may be considered as a hexahedron, and there is a sound hole on each of a pair of opposite surfaces, and the sound hole is a through hole. Two sound holes of the directional sound pickup unit are respectively located at two ends of a diaphragm. Vibration of the diaphragm depends on a pressure difference between the two ends based on a phase relationship. A fine acoustic filter is disposed at a front end of a rear sound hole to delay a sound, so that sounds from the rear may simultaneously reach the diaphragm from front and rear sound holes and are canceled out, so that the sound pickup unit has high sensitivity to a sound from a specific angle. 604 represents a structural part attached to the temple, and is configured to form a sound pickup channel suitable for the directional sound pickup unit 601 with the temple. 602 represent two sound pickup ports of the sound pickup unit 601. 603 represent sound inlet holes of a sound pickup channel of the sound pickup unit 601. The two sound pickup ports 602 of the sound pickup unit 601 correspond to the two sound inlet holes 603 of the sound pickup channel. The sound inlet holes 603 communicate with the sound pickup ports 602 through the sound pickup channel.

The following describes the direction of the straight line on which the temple is located as an x-axis direction, a direction of a straight line on which a left frame and a right frame of a lens are located as a y-axis direction, and a direction of a straight line on which an upper frame and a lower frame of the lens are located as a z-axis direction. The sound pickup unit 601 may be installed as follows: In an arrangement order from left to right shown in FIG. 6, FIG. 7, FIG. 8, and FIG. 9, the first sound pickup unit and the third sound pickup unit are installed inside the temple and parallel to an xy plane (a plane on which an x axis and a y axis are located) on which a side surface of the temple is located, and the first sound pickup unit and the third sound pickup unit are laid out on the xy plane. A sound pickup channel that matches the third sound pickup unit includes a sound inlet hole 603 and the sound pickup unit 601 that are located on the temple, and the structural part 604 attached to the temple. Two sound pickup ports 602 of the third sound pickup unit 601 correspond to two sound inlet holes 603 of the sound pickup channel. A sound is picked up by the sound pickup unit 601 through the sound inlet holes 602 and 603 on the temple.

Further, the sound pickup unit 601 may be installed as follows: In the arrangement order from left to right shown in FIG. 6, FIG. 7, FIG. 8, and FIG. 9, the second sound pickup unit and the fourth sound pickup unit are installed inside the temple and parallel to a yz plane (a plane on which the y axis and a z axis are located) on which the lens is located. It should be noted that a manner of installing the sound pickup unit 601 inside the temple is not specifically limited in this application. A user or a person skilled in the art may freely select a corresponding installation manner to adapt to the irregular distribution, the uneven size, and the like that may exist in the internal space of the temple.

As shown in FIG. 10, a ninth directional sound pickup unit 1001 may be installed inside the bridge connection frame of the smart glasses. The directional sound pickup unit 1001 may be installed inside the bridge connection frame of the smart glasses and parallel to an xz plane (a plane on which the x axis and the z axis are located). A main function of the directional sound pickup unit 1001 may be specifically sound pickup of a sound of the wearer and auxiliary sound enhancement for the wearer.

In some embodiments, when a wearable sound pickup device 100 is a wireless headset, a sound pickup unit array 102 may be specifically installed inside a stem of the wireless headset, so that the sound pickup capability beyond the hearing distance of the human ear is provided, and wearing discomfort, a negative impact on a wearer appearance, and the like caused by installation outside the wireless headset are avoided.

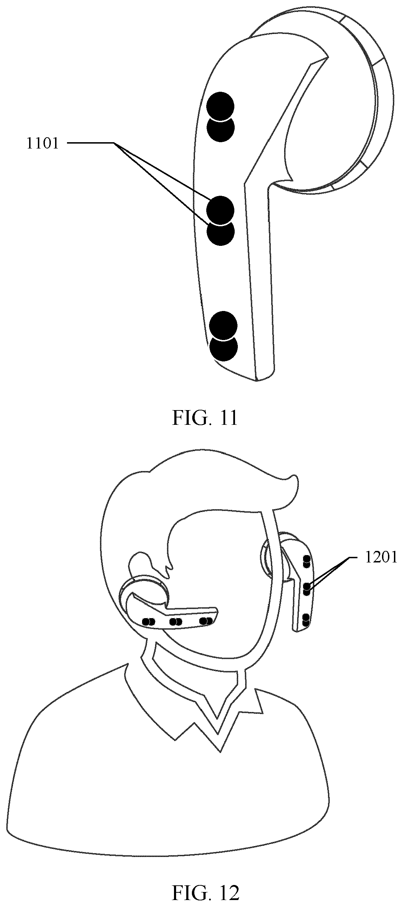

Based on the foregoing embodiment, in some embodiments, refer to FIG. 11 and FIG. 12. FIG. 11 is a diagram of a structure of a wireless headset according to an embodiment of this application. FIG. 12 is a diagram in which a wireless headset performs long-distance sound pickup according to an embodiment of this application.

As shown in FIG. 11, for each sound pickup unit in the sound pickup unit array, a sound pickup channel that matches the sound pickup unit has two sound inlet holes 1101 located on an outer surface of the stem of the wireless headset, and a direction of a straight line on which the two sound inlet holes 1101 are located is consistent with a direction of a straight line on which the stem of the wireless headset is located. When a user wears the wireless headset, sounds from the front and the rear of the user reach the two sound inlet holes 1101 at consistent distances. In this case, sounds that simultaneously enter the sound pickup channel from the two sound inlet holes 1101 cancel each other out, and therefore the sound pickup unit cannot pick up the sounds, so that the sound pickup unit can shield the sounds from the front and the rear of the user. In addition, a sound from a direction other than upper and lower directions of the user is also diminished because sound components that exist in the front and the rear of the user are canceled out.

However, sounds above and below the user reach the two sound inlet holes with a largest distance difference. Therefore, mutual interference between sounds that enter the sound pickup channel from the two sound inlet holes, that is, from the front and the rear, is the smallest, the sound pickup unit can pick up a sound with smallest interference, and the wireless headset can pick up the sound of the wearer more clearly and accurately.

As shown in FIG. 12, when sounds from the front and rear directions need to be picked up, a posture of one headset may be adjusted, so that a stem points to a front direction. In this case, connection lines of all sound inlet holes 1201 point to the front and rear directions of the wearer. Sounds above and below the user reach the two sound inlet holes 1201 at consistent distances. In this case, sounds that simultaneously enter the sound pickup channel from the two sound inlet holes 1201 cancel each other out, and therefore the sound pickup unit cannot pick up the sounds, so that the sound pickup unit can shield the sounds above and below the user. In addition, a sound from a direction other than front and rear directions of the user is also diminished because sound components that exist above and below the user are canceled out. Sounds from the front and the rear of the user reach the two sound inlet holes 1201 with a largest distance difference. Therefore, mutual interference between sounds that enter the sound pickup channel from the two sound inlet holes 1201, that is, from the front and the rear, is the smallest, and the sound pickup unit can pick up a sound with smallest interference, so that the sound pickup unit can obtain best sound pickup effect when picking up the sounds from the front and rear directions. In this way, the sound pickup unit can obtain the best sound pickup effect when picking up the sounds from the front and rear directions, and the wireless headset further obtains the sound pickup capability beyond the hearing distance of the human ear.

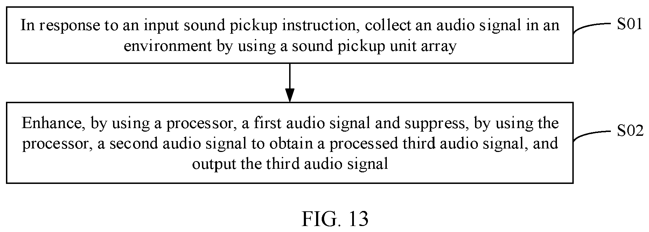

FIG. 13 is a flowchart of a sound pickup method according to an embodiment of this application. The method may be applied to the wearable sound pickup device in the foregoing embodiments. The method may include but is not limited to the following steps.

Step S01: In response to an input sound pickup instruction, collect an audio signal in an environment by using a sound pickup unit array.

In some embodiments, the audio signal includes a first audio signal and a second audio signal, a direction of the first audio signal is consistent with an extension direction of an extension component, and a direction of the second audio signal is inconsistent with the extension direction of the extension component.

In some embodiments, the sound pickup instruction may be input by a wearer by pressing a specified button on the wearable sound pickup device or touching a touch area on the wearable sound pickup device. For example, the wearer may double-press the specified button to trigger the sound pickup instruction.

The sound pickup instruction may alternatively be input by the wearer by using a terminal or a mobile terminal that is wirelessly connected to the wearable sound pickup device. For example, the wearer may tap a sound pickup instruction on a mobile phone, to send the sound pickup instruction to the wearable sound pickup device. A manner of inputting the sound pickup instruction is not specifically limited in this application.

Step S02: Enhance, by using a processor, the first audio signal and suppress, by using the processor, the second audio signal to obtain a processed third audio signal, and output the third audio signal.

In some embodiments of this application, the first audio signal whose direction is consistent with the extension direction of the extension component and the second audio signal whose direction is inconsistent with the extension direction of the extension component in the environment are first collected by using the sound pickup unit array. Then, the processor enhances the first audio signal and suppresses the second audio signal, so that the first audio signal in a specific direction is stronger in the output audio signal, and the second audio signal in another direction is weaker, implementing directional sound pickup in the environment.

In some embodiments, that the processor performs audio enhancement on audio signals picked up by a plurality of sound pickup units may be specifically performing super-directional beamforming on the audio signals picked up by the sound pickup unit array. The super-directional beamforming may be specifically implemented based on an optimized beamformer that controls amplification of white noise.

On the basis of the foregoing embodiments, in some embodiments, an end-fire direction enhanced signal may be obtained through super-directional beamforming, then the enhanced signal obtained through beamforming is used as guidance, and all channels are fed back to a preset neural network for audio enhancement, to further improve sound pickup effect.

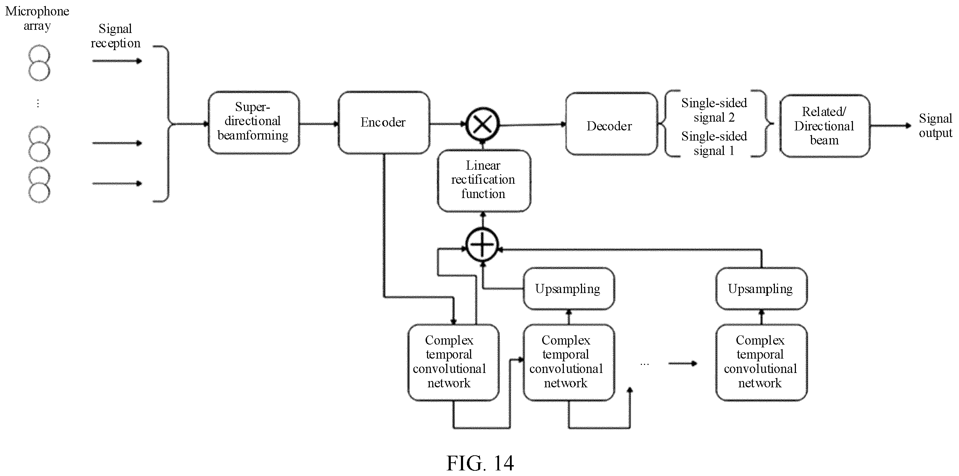

For example, FIG. 14 is a diagram of audio signal processing according to an embodiment of this application.

For a single-sided temple, four directional sound pickup units may be placed along the temple at an equal spacing or at variable spacings. A signal of a single-sided sound pickup unit array first performs super-directional beamforming. Super-directional beamforming is an optimized beamformer that controls amplification of white noise. A function of super-directional beamforming is to perform maximum directional beamforming under a constraint of avoiding or reducing amplification of the white noise. After beamforming, signals in four channels change into a signal in one channel. In this case, an input signal-to-noise ratio of the signal in one channel is higher than that of a signal in any channel of the original four channels, so that a collected long-distance audio signal is clearer, and user experience is further improved.

In FIG. 14, modules from an "encoder" module to a "decoder" are post-processing modules, namely, an entire neural network architecture. A neural network is trained by using the beamformed signal and a target signal. A complex temporal convolutional network is used to learn a spectrogram, to further obtain a neural network that may extract a target sound source. It should be noted that a type of the neural network is not specifically limited in this application, provided that the neural network can extract the target sound source.

In some embodiments, after the mobile phone delivers a control command to smart glasses, the smart glasses perform sound pickup and processing on a to-be-enhanced target, and return a single-channel audio stream and/or a dual-channel audio stream to the mobile phone. A processed signal may be separately processed for each temple to form a dual-channel audio stream (a single-sided signal 1 and a single-sided signal 2 shown in FIG. 14), or may be jointly processed to form a single-channel audio stream, and the audio stream is transmitted to the mobile phone in a wireless transmission manner for storage.

In some embodiments, a sound pickup task category in the sound pickup instruction may include a hearing aid task. In this case, the wearable sound pickup device may be considered as a long-distance hearing aid, and can pick up and amplify a sound that is beyond a hearing distance of a human ear, so that the wearer can clearly hear a distant sound. When the sound pickup task category in the sound pickup instruction is a hearing aid task, a processed audio signal may be output to a speaker.

The outputting a third audio signal may be specifically:
parsing, by using the processor, the sound pickup instruction to obtain a sound pickup task category, where the sound pickup task category includes a hearing aid task; and
if the sound pickup task category is a hearing aid task, outputting the third audio signal to a speaker.

In some embodiments, the method further includes:
in response to a first determining instruction input by a user, executing the first determining instruction to determine a first to-be-enhanced target;
enhancing, by using the processor, a fourth audio signal sent by the first to-be-enhanced target, and suppressing, by using the processor, a fifth audio signal, to obtain a sixth audio signal, where the fifth audio signal is an audio signal other than the fourth audio signal; and
outputting the sixth audio signal to the speaker in real time.

In some embodiments, the sound pickup task category in the sound pickup instruction may alternatively include a sound pickup assistance task. When the sound pickup task category in the sound pickup instruction is a sound pickup assistance task, the processed audio signal may be output to the target device. In other words, in this case, the wearable sound pickup device may be considered as a long-distance auxiliary sound pickup unit for sound reception, and can assist a video recording device like a mobile phone or a camera in sound reception, further improving sound reception effect.

The sound pickup task category includes a sound pickup assistance task, and the method further includes:
if the sound pickup task category is a sound pickup assistance task, parsing, by using the processor, the sound pickup instruction to obtain a target device; and
outputting the third audio signal to the target device by using a wireless communication module.

In some embodiments, the method further includes:
receiving a second determining instruction sent by the target device, and executing the second determining instruction to determine a second to-be-enhanced target;
enhancing, by using the processor, a seventh audio signal sent by the second to-be-enhanced target, and suppressing, by using the processor, an eighth audio signal, to obtain a ninth audio signal, where the eighth audio signal is an audio signal other than the seventh audio signal; and
outputting the ninth audio signal to the target device by using the wireless communication module.

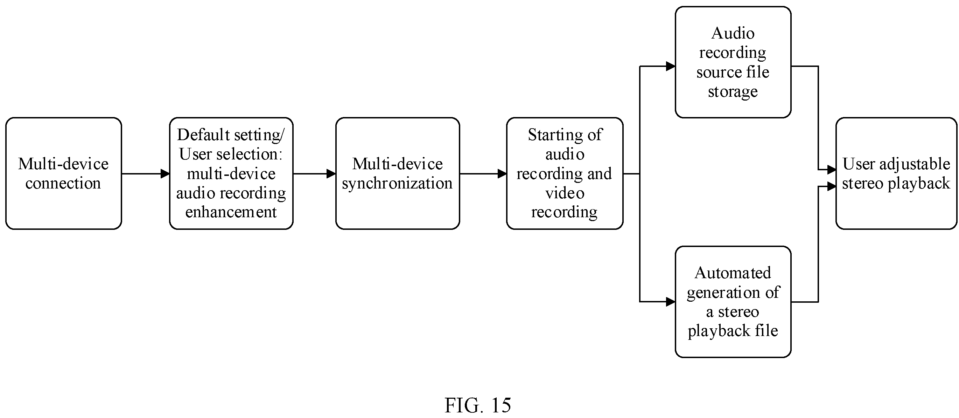

For example, FIG. 15 is a schematic flowchart of sound pickup assistance by using a wearable sound pickup device according to an embodiment of this application.

As shown in FIG. 15, when detecting a connection request of another device, the wearable sound pickup device may determine, based on an instruction input by the user, whether to establish a connection to the another device. After establishing the connection, the wearable sound pickup device may determine, based on default setting or an instruction input by the user, whether to perform multi-device audio recording enhancement. For example, after the mobile phone of the user establishes a wireless connection to the smart glasses through Bluetooth, if a multi-device audio recording enhancement function is automatically started by default after the connection, the smart glasses may detect in real time whether the mobile phone starts a sound pickup function of the mobile phone (for example, may detect whether the mobile phone starts an audio recording function, a video recording function, a voice sending function, a voice call function, and a video call function). If the smart glasses detect that the mobile phone starts the sound pickup function of the mobile phone, a sound is picked up by using the sound pickup unit array, and an obtained audio signal is sent to the mobile phone in real time for storage.

Subsequently, the mobile phone may further process the audio signal picked up by the smart glasses. For example, the mobile phone uses an ambient sound picked up by the mobile phone as a background, and superimposes the audio signal picked up by the smart glasses on the ambient sound, to retain the ambient sound and enhance a target sound signal. In addition, left and right temples may respectively generate enhanced signals of left and right sound channels.

After a default sound playback signal is generated, the user may manually adjust parameter settings to further enhance the target signal or reserve more ambient sound signals.

Based on the foregoing embodiment, in some embodiments, when the sound pickup task category in the sound pickup instruction is a sound pickup assistance task, the wearer may further select the to-be-enhanced target by using the video recording device like the mobile phone or the camera, so that the wearable sound pickup device specifically performs audio enhancement on a sound of the to-be-enhanced target, further improving sound reception effect.

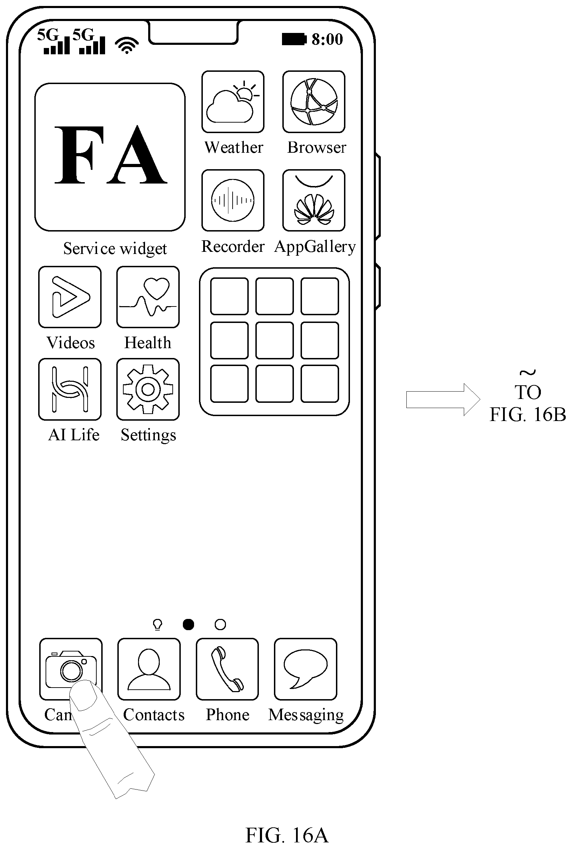

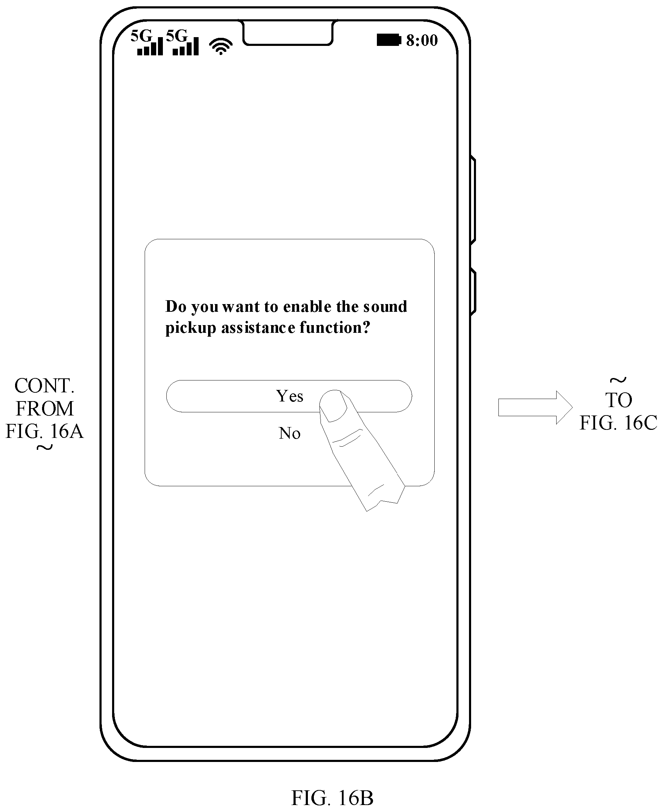

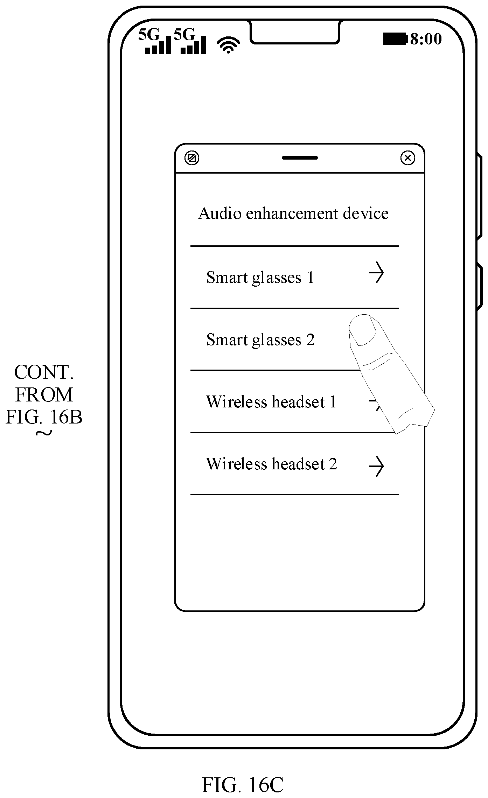

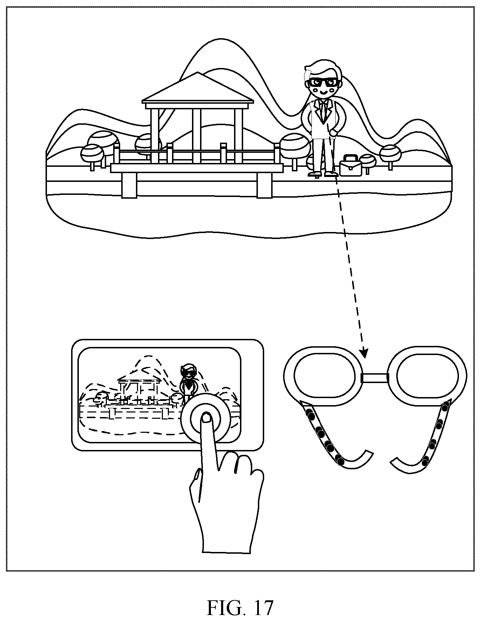

For example, refer to FIG. 16A to FIG. 16C and FIG. 17. FIG. 16A to FIG. 16C are a diagram of a scenario of selecting smart glasses for sound pickup assistance according to an embodiment of this application. FIG. 17 is a diagram of a scenario of performing pickup assistance by using smart glasses according to an embodiment of this application.

As shown in FIG. 16A to FIG. 16C, in a scenario of performing pickup assistance by using the smart glasses, if the user needs to record a video and expects to perform audio enhancement on a specified target by using the smart glasses, the user may first tap the video recording function of the mobile phone, and select "Yes" on a "Do you want to enable the sound pickup assistance function" page that pops up, and the mobile phone outputs devices that may be used for audio enhancement, such as smart glasses and a wireless headset, for the user to make a selection. For example, the user may select "smart glasses 2" as an audio enhancement device.

As shown in FIG. 17, after it is determined that the audio enhancement device is the smart glasses, after the mobile phone detects an operation performed by the user to select a to-be-enhanced target on a screen, the mobile phone sends a determining instruction including the to-be-enhanced target to the smart glasses, and the smart glasses execute the determining instruction by using the processor to determine the to-be-enhanced target. After detecting an operation performed by the user to select to start recording on the screen, the mobile phone sends a sound pickup instruction to the smart glasses, and simultaneously starts the video recording function to record a target area. After receiving the sound pickup instruction, the smart glasses obtain an audio signal of the to-be-enhanced target by using the sound pickup unit array.

In some embodiments, after wearing the smart glasses, the user faces a to-be-shot target. After determining the to-be-enhanced target, the smart glasses may obtain an audio signal in an environment by using the sound pickup unit array. In this case, a direction of the audio signal of the to-be-enhanced target is consistent with an extension direction of the smart glasses, the audio signal of the to-be-enhanced target is enhanced, and an audio signal in another direction is diminished.

It may be understood that this embodiment of this application provides a sound pickup assistance mode by using the smart glasses, so that when the user has a video recording requirement, the mobile phone may switch, based on an actual sound pickup requirement of the user, to a sound pickup mode required by the mobile phone, for example, an omnidirectional sound pickup mode or a directional sound pickup mode. After the user selects the directional sound pickup mode, the mobile phone may identify a to-be-enhanced target of the user by detecting a convenient selection operation performed by the user on an area in a viewfinder frame, so that during video recording, a sound signal from a target concerned by the user is picked up in a targeted manner, and a sound signal from another target is shielded. According to the sound pickup method provided in embodiments of this application, more user-friendly sound pickup experience may be provided for the user.

For example, it is assumed that the user uses the mobile phone to record a video or make a video call in a concert scenario. If the user selects the directional sound pickup mode and selects a target shooting object concerned by the user, during video recording, the mobile phone may pick up, by using sound pickup glasses in a targeted manner, a sound signal from the target concerned by the user (for example, a musical instrument of a performer, or a host), and shield a noise signal like applause of an audience or a footstep of staff. For example, the mobile phone may control, by using the sound pickup glasses, a sound pickup unit corresponding to an orientation range of the target concerned by the user, for example, the performer, or the host, to collect an audio signal within the orientation range, and control a sound pickup unit corresponding to an orientation range of a stand not to collect an audio signal.

In some embodiments, after starting the video recording function, the mobile phone may obtain only video data, and all audio signals are obtained by using the smart glasses, to further save a space resource of the mobile phone.

Further, after starting the video recording function, the mobile phone may obtain both the video data and audio signals. The audio signals obtained by the mobile phone and the audio signals obtained by the smart glasses may be superimposed, to enhance or diminish an ambient sound. In this manner, when the user watches a video subsequently, an audio output solution may be adjusted at any time based on a requirement, to provide more user-friendly sound pickup experience for the user. For example, in a possible solution, the user may play only a sound of the target shooting object in a focus area. In another possible solution, the user may choose to play sounds of any plurality of target shooting objects in the video.

In some embodiments, the user may further input a switching instruction on the mobile phone or the smart glasses. After detecting the switching instruction, the mobile phone or the smart glasses may determine a new target based on the switching instruction, switch the to-be-shot target to the new target, and continue to perform sound pickup on the new target.

In some embodiments, a sound produced by the to-be-enhanced target is enhanced, and a sound other than the sound of the to-be-enhanced target is suppressed. This may be specifically implemented by modifying a compensation value for a sound.

For example, a corresponding audio enhancement parameter may be generated based on a position relationship between the to-be-enhanced target and the wearable sound pickup device, audio enhancement is performed on an audio signal based on the second audio enhancement parameter to obtain an enhanced audio signal, and the enhanced audio signal is output to a target device by using the wireless communication module.

On the basis of the foregoing embodiments, in some embodiments, an end-fire direction enhanced signal may be obtained through super-directional beamforming, then the enhanced signal obtained through beamforming is used as guidance, and all channels are fed back to a preset neural network for audio enhancement, to further improve sound pickup effect.

For example, super-directional beamforming may be performed on an audio signal collected by each sound pickup unit, to obtain a super-directional beam signal; and then audio enhancement is performed on the super-directional beam signal based on the audio enhancement parameter by using a preset neural network, to obtain an enhanced audio signal.

On the basis of the foregoing embodiment, in some embodiments, after the enhanced audio signal is obtained, the following steps may be further performed:
obtaining an ambient audio signal, and performing audio fusion on the ambient audio signal and the second enhanced audio signal by using a preset fusion algorithm, to obtain a fused audio signal; and
outputting the fused audio signal to the target device by using the wireless communication module.

For example, after obtaining the second enhanced audio signal, the smart glasses may use the ambient audio signal as a background, and superimpose the second enhanced audio signal on the ambient audio signal, to retain the ambient sound and enhance the target sound signal.

It should be noted that, in the foregoing embodiment of this application, the mobile phone in the video recording scenario is merely used as an example. In a video call scenario or the like, directional sound pickup may also be performed by using a method similar to that in the foregoing embodiment of this application. For example, when the mobile phone displays a shooting interface in the video call scenario, if the mobile phone detects an operation performed by the user to select one or more target shooting objects on a video call interface, the mobile phone may obtain only audio from the one or more target shooting objects by using the smart glasses, and shield audio from another target shooting object. Alternatively, the mobile phone may enhance the audio from the one or more target shooting objects by using the smart glasses, and diminish the audio from the another target shooting object. In this way, more user-friendly video call experience is provided for the user.

It should be noted that the sound pickup method provided in this embodiment may be implemented by using the wearable sound pickup device that is provided in the foregoing embodiment and in which an arrangement direction of the sound pickup unit is consistent with the extension direction of the extension component, or may be implemented by using another type of wearable sound pickup device in which an arrangement direction of a sound pickup unit is inconsistent with an extension direction of an extension component. This is not specifically limited in this application.

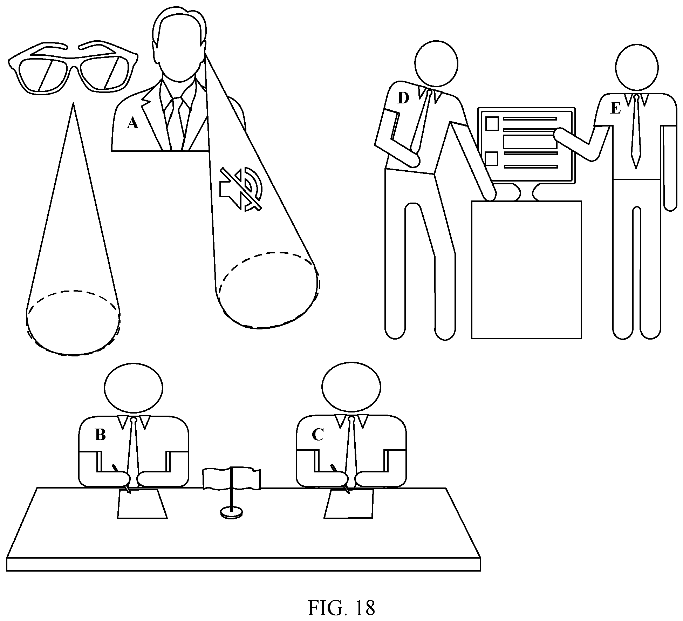

In some embodiments, FIG. 18 is a diagram of a scenario of aiding hearing by using smart glasses according to an embodiment of this application.

As shown in FIG. 18, it is assumed that A acts as a meeting recorder, and needs to record meeting content, participants B and C are far away from A, and D and E who communicate with each other are beside A. In this case, A cannot hear meeting communication content of B and C, and therefore meeting recording cannot be performed normally.

To avoid this case, in a scenario of aiding hearing by using the smart glasses, if A wears the smart glasses, A may select the directional sound pickup mode on the smart glasses, and select the to-be-enhanced target concerned by the user. In this way, the smart glasses may pick up, in a targeted manner, sound signals from the target B and the target C that are concerned by the user, and shield a noise signal like a communication sound between D and E, or a footstep of staff. For example, the smart glasses may control a microphone corresponding to an orientation range of B and C to collect an audio signal within the orientation range, control a microphone corresponding to an orientation range of D and E not to collect an audio signal, and finally output the collected audio signal in real time by using the speaker of the smart glasses. In this case, A may perform meeting recording based on heard meeting content.

For example, the mobile phone may alternatively collect all audio signals by using the sound pickup unit array of the smart glasses, and then determine an audio signal in an orientation of B and C as a first audio signal, and an audio signal in an orientation of D and E as a second audio signal. Finally, the processor enhances the first audio signal and suppresses the second audio signal to obtain a processed audio signal. Finally, the processed audio signal is output in real time by using the speaker of the smart glasses. In this case, A may perform meeting recording based on heard meeting content.

In some embodiments, sound pickup may alternatively be performed by using AR glasses with a "super hearing" function. For example, an image target may be identified through speech interaction. In a scenario of aiding hearing by using the smart glasses, if A wears the AR glasses, a person label may be first identified by using the AR glasses, to identify B and C with a "meeting label" and D and E with a "communication label/noise label".

In this case, the user A may input a statement to a smart voice assistant to concern a target, for example, may input a statement like "enhancing a user with a meeting label", "shielding a user with a noise label", or "entering a meeting target pickup mode". The AR glasses determine a to-be-enhanced target based on the input statement, and then may pick up, in a targeted manner, sound signals from the target B and a target C that are concerned by the user, and shield the noise signal like a communication sound between D and E, or a footstep of staff.

It should be noted that, in the foregoing embodiment of this application, the mobile phone in the video recording scenario is merely used as an example. In a video call scenario or the like, directional sound pickup may also be performed by using a method similar to that in the foregoing embodiment of this application. For example, when the mobile phone displays a shooting interface in the video call scenario, if the mobile phone detects an operation performed by the user to select one or more target shooting objects on a video call interface, the mobile phone may obtain only audio from the one or more target shooting objects by using the smart glasses, and shield audio from another target shooting object. Alternatively, the mobile phone may enhance the audio from the one or more target shooting objects by using the smart glasses, and diminish the audio from the another target shooting object. In this way, more user-friendly video call experience is provided for the user.

In addition, the sound pickup method provided in this embodiment may be implemented by using the wearable sound pickup device that is provided in the foregoing embodiment and in which an arrangement direction of the sound pickup unit is consistent with the extension direction of the extension component, or may be implemented by using another type of wearable sound pickup device in which an arrangement direction of a sound pickup unit is inconsistent with an extension direction of an extension component. This is not specifically limited in this application.

The foregoing descriptions are merely example embodiments of this application, but are not intended to limit this application. Any modification, equivalent replacement, or improvement made without departing from the spirit and principle of this application should fall within the protection scope of this application.

## Claims

1. A wearable sound pickup device, comprising:
a wearable sound pickup device body, wherein the wearable sound pickup device body comprises an extension component;
a sound pickup unit array installed inside the wearable sound pickup device body and configured for long-distance sound pickup, wherein the sound pickup unit array comprises at least two sound pickup units, and an arrangement direction of each sound pickup unit in the sound pickup unit array is consistent with an extension direction of the extension component; and
a processor connected to the sound pickup unit array.

2. The wearable sound pickup device according to claim 1, wherein the wearable sound pickup device is specifically smart glasses, and the extension component is a temple of the smart glasses; and
for each sound pickup unit in the sound pickup unit array, a sound pickup channel that matches the sound pickup unit is disposed on the temple, and the sound pickup channel has at least one sound inlet hole.

3. The wearable sound pickup device according to claim 2, wherein the sound pickup unit comprises two sound pickup ports that are disposed opposite to each other, the sound pickup channel has two sound inlet holes located on an outer surface of the temple of the smart glasses, each sound inlet hole corresponds to one of the sound pickup ports, the sound inlet hole communicates with the corresponding sound pickup port through the sound pickup channel, and a direction of a straight line on which the two sound inlet holes are located is consistent with a direction of a straight line on which the temple of the smart glasses is located.

4. The wearable sound pickup device according to claim 2, wherein the wearable sound pickup device further comprises a sound pickup unit that is connected to the processor and that is installed inside a bridge connection frame of the smart glasses.

5. The wearable sound pickup device according to claim 4, wherein a sound pickup channel of the sound pickup unit installed inside the bridge connection frame of the smart glasses has two sound inlet holes located on an outer surface of the bridge connection frame of the smart glasses, and a direction of a straight line on which the two sound inlet holes are located is vertically downward.

6. The wearable sound pickup device according to claim 2, wherein the sound pickup unit array is installed inside the temple of the smart glasses.

7. The wearable sound pickup device according to claim 1, wherein the wearable sound pickup device is specifically a wireless headset, and the extension component is a stem of the wireless headset; and
the sound pickup unit array is installed inside the stem of the wireless headset.

8. The wearable sound pickup device according to claim 7, wherein for each sound pickup unit in the sound pickup unit array, a sound pickup channel that matches the sound pickup unit is disposed on the stem, and the sound pickup channel has at least one sound inlet hole.

9. The wearable sound pickup device according to claim 8, wherein the sound pickup channel has two sound inlet holes located on an outer surface of the stem of the wireless headset, and a direction of a straight line on which the two sound inlet holes are located is consistent with a direction of a straight line on which the stem of the wireless headset is located.

10. The wearable sound pickup device according to any one of claims 1 to 9, wherein each sound pickup unit in the sound pickup unit array is specifically a directional sound pickup unit.

11. The wearable sound pickup device according to claim 10, wherein the wearable sound pickup device further comprises a speaker connected to the processor.

12. A sound pickup method, applied to the wearable sound pickup device according to any one of claims 1 to 11, wherein the sound pickup method comprises:
in response to an input sound pickup instruction, collecting an audio signal in an environment by using a sound pickup unit array, wherein the audio signal comprises a first audio signal and a second audio signal, a direction of the first audio signal is consistent with an extension direction of an extension component, and a direction of the second audio signal is inconsistent with the extension direction of the extension component; and
enhancing, by using a processor, the first audio signal and suppressing, by using the processor, the second audio signal to obtain a processed third audio signal, and outputting the third audio signal.

13. The sound pickup method according to claim 12, wherein the outputting the third audio signal comprises:
parsing, by using the processor, the sound pickup instruction to obtain a sound pickup task category, wherein the sound pickup task category comprises a hearing aid task; and
if the sound pickup task category is a hearing aid task, outputting the third audio signal to a speaker.

14. The sound pickup method according to claim 13, wherein the method further comprises:
in response to a first determining instruction input by a user, executing the first determining instruction to determine a first to-be-enhanced target;
enhancing, by using the processor, a fourth audio signal sent by the first to-be-enhanced target, and suppressing, by using the processor, a fifth audio signal, to obtain a sixth audio signal, wherein the fifth audio signal is an audio signal other than the fourth audio signal; and
outputting the sixth audio signal to the speaker in real time.

15. The sound pickup method according to claim 13, wherein the sound pickup task category comprises a sound pickup assistance task, and the method further comprises:
if the sound pickup task category is a sound pickup assistance task, parsing, by using the processor, the sound pickup instruction to obtain a target device; and
outputting the third audio signal to the target device by using a wireless communication module.

16. The sound pickup method according to claim 15, wherein the method further comprises:
receiving a second determining instruction sent by the target device, and executing the second determining instruction to determine a second to-be-enhanced target;
enhancing, by using the processor, a seventh audio signal sent by the second to-be-enhanced target, and suppressing, by using the processor, an eighth audio signal, to obtain a ninth audio signal, wherein the eighth audio signal is an audio signal other than the seventh audio signal; and
outputting the ninth audio signal to the target device by using the wireless communication module.
